Europäisches Patentamt

European Patent Office

Office européen des brevets

(11) Veröffentlichungsnummer: **0 469 358 A1**

# EUROPÄISCHE PATENTANMELDUNG

(21) Anmeldenummer: **91111548.3**

(51) Int. Cl.⁵: **A44B 19/42**

(22) Anmeldetag: **11.07.91**

(30) Priorität: **03.08.90 DE 4024631**

(43) Veröffentlichungstag der Anmeldung:
**05.02.92 Patentblatt 92/06**

(84) Benannte Vertragsstaaten:
**AT CH DE DK FR GB IT LI NL SE**

(71) Anmelder: **Opti Patent-, Forschungs- und Fabrikations-AG**

**CH-8750 Riedern-Allmeind(CH)**

(72) Erfinder: **Fröhlich, Alfons**
**Veddershang 5**
**W-4300 Essen 1(DE)**
Erfinder: **Griessbaum, Karl**
**Grävenweg 12**
**W-4300 Essen(DE)**
Erfinder: **Wulff, Thomas**
**Wiekrechts 8**
**W-2990 Papenburg 1(DE)**

(74) Vertreter: **Andrejewski, Walter et al**
**Theaterplatz 3 Postfach 100254**
**W-4300 Essen 1(DE)**

(54) Thermofixierungsverfahren und -vorrichtung zur Herstellung von Reissverschlüssen.

(57) Verfahren zur Herstellung eines endlosen Reißverschlußbandes aus zwei gekuppelten Vorprodukt-Bandhälften im Zuge der Herstellung von Reißverschlüssen einer in bezug auf Werkstoff und Maße vorgegebenen Type von Reißverschlüssen aus textilen Tragbändern und damit verbundenen Verschlußgliederreihen aus Kunststoffmonofilament. Es soll ein Austausch von Reißverschlußhälften der gleichen Type zulassendes genaues und zeitkonstantes Teilungsmaß eingerichtet werden. Die gekuppelten Vorprodukt-Bandhälften werden unter Anwendung einer Vorthermofixierung mit einer vorgegebenen Vorthermofixierungstemperatur mit einem Vorproduktteilungsmaß hergestellt, welches um 0,5 bis 5% größer ist als das Funktionsteilungsmaß. Die gekuppelten Vorprodukt-Bandhälften werden bei einer Nachthermofixierung mit einer Nachthermofixierungstemperatur, die niedriger ist als die Vorthermofixierungstemperatur, einer Nachthermofixierung unterworfen und dabei gleichzeitig durch mechanische Hilfsmittel auf das Funktionsteilungsmaß eingestellt und/oder gehalten. Sie werden danach als Reißverschlußband abgezogen. - Auch eine Vorrichtung für die Durchführung des erfindungsgemäßen Verfahrens wird angegeben.

Die Erfindung betrifft ein Verfahren zur Herstellung von Reißverschlußhälften, die gegen andere Reißverschlußhälften aus der gleichen Fertigung austauschbar sind. Das Verfahren gehört zur fabrikmäßigen Herstellung eines endlosen Reißverschlußbandes aus zwei gekuppelten Vorprodukt-Bandhälften im Zuge der Herstellung von Reißverschlüssen einer in bezug auf Werkstoff und Maße vorgegebenen Type von Reißverschlüssen aus textilen Tragbändern und damit verbundenen Verschlußgliederreihen aus Kunststoffmonofilament. Die Reißverschlüsse sollen ein den Austausch von Reißverschlußhälften der gleichen Type zulassendes genaues und zeitkonstantes Teilungsmaß aufweisen, welches für die sichere Funktion wesentlich ist. Dieses Teilungsmaß wird im folgenden als Funktionsteilungsmaß bezeichnet. Die Erfindung betrifft fernerhin eine Vorrichtung, die für die Durchführung eines solchen Verfahrens besonders geeignet ist. - Das Austauschen von Reißverschlußhälften der gleichen Type ist erforderlich, wenn die beiden Reißverschlußhälften des fertigen Reißverschlusses grundsätzlich trennbar sind und eine Reißverschlußhälfte permanent befestigt, die andere Hälfte mit einem zu befestigenden Gegenstand verbunden ist, wie es beispielsweise beim Innenfutter von Mänteln, bei Vordächern von Zelten, bei Planenabschnitten u.dgl. erforderlich ist, weil häufig nur eine Reißverschlußhälfte reparaturbedürftig wird oder andere Gegenstände angeschlossen werden sollen. Ein genau und zeitkonstant eingerichtetes Funktionsteilungsmaß ist jedoch auch vorteilhaft für die Weiterverarbeitung des zunächst endlos anfallenden Reißverschlußbandes zu fertigen Reißverschlüssen.

Im Rahmen der aus der Praxis bekannten Maßnahmen, von denen die Erfindung ausgeht, werden die gekuppelten Vorprodukt-Bandhälften, z.B. in einem Formrad, welches Formbetten mit einer dem Teilungsmaß entsprechenden Teilung aufweist, einer Thermofixierung mit einer vorgegebenen Thermofixierungstemperatur einstufig unterworfen. Dabei kann nicht ohne weiteres sichergestellt werden, daß die hergestellten Reißverschlüsse ein den Austausch von Reißverschlußhälften der gleichen Type zulassendes, d. h. ausreichend genaues und zeitkonstantes Teilungsmaß aufweisen. Unter dem Einfluß von inneren Spannungen in den Ausgangsmaterialien, aus denen die Vorprodukt-Bandhälften gefertigt werden sowie unter dem Einfluß von inneren Spannungen, die nach der Thermofixierung verbleiben, können unkontrollierte Veränderungen des Funktionsteilungsmaß auftreten, die den beschriebenen Austausch verhindern. Das gilt auch für eine andere bekannte Verfahrensweise (EP 0 124 130), die ebenfalls mit einer einstufigen Thermofixierung arbeitet, wobei jedoch in zwei Schritten zunächst gleichsam eine Schrumpfung des Teilungsmaßes herbeigeführt wird, die kleiner ist als das Funktionsteilungsmaß, und wobei im Anschluß daran eine Streckung auf das Funktionsteilungsmaß durchgeführt wird. Das geschieht gleichsam in einer Wärme, die zunächst das Schrumpfen des Teilungsmaßes bewirkt, wobei beim anschließenden Abkühlen die beschriebene Dehnung auf das Funktionsteilungsmaß herbeigeführt wird. Auch bei dieser Verfahrensweise ist nicht sichergestellt, daß die hergestellten Reißverschlüsse mit einer ausreichend engen Toleranzen das Funktionsteilungsmaß aufweisen, welches für das beschriebene Austauschen von Reißverschlußhälften erforderlich ist.

Der Erfindung liegt die Aufgabe zugrunde, das eingangs beschriebene Verfahren so zu führen, daß sichergestellt ist, daß das Reißverschlußband ein sehr genaues und zeitkonstantes Funktionsteilungsmaß aufweist und folglich das beschriebene Austauschen durchgeführt werden kann. Der Erfindung liegt fernerhin die Aufgabe zugrunde, eine Vorrichtung anzugeben, die für die Durchführung eines solchen Verfahrens besonders geeignet ist.

Zur Lösung dieser Aufgabe ist Gegenstand der Erfindung ein Verfahren zur Herstellung von Reißverschlußhälften, die gegen andere Reißverschlußhälften aus der gleichen Fertigung austauschbar sind, im Zuge der Herstellung eines endlosen Reißverschlußbandes aus zwei gekuppelten Vorprodukt-Bandhälften für Reißverschlüsse einer in bezug auf Werkstoff und Maße vorgegebenen Type aus textilen Tragbändern und aus Kunststoffmonofilament hergestellten kontinuierlichen Verschlußgliederreihen, wobei die gekuppelten Vorprodukt-Bandhälften unter Anwendung einer Vorthermofixierung mit einer vorgegebenen Vorthermofixierungstemperatur mit einem Vorproduktteilungsmaß hergestellt werden, welches um 0,5 bis 5% größer ist als das Funktionsteilungsmaß, wobei die gekuppelten Vorprodukt-Bandhälften bei einer Nachthermofixierung mit einer Nachthermofixierungstemperatur, die niedriger ist als die Vorthermofixierungstemperatur, einer Nachthermofixierung unterworfen werden und wobei die gekuppelten Vorprodukt-Bandhälften bei der Nachthermofixierung gleichzeitig durch mechanische Hilfsmittel auf das Funktionsteilungsmaß eingestellt und/oder gehalten werden - sowie danach als Reißverschlußband abgezogen werden. Vorzugsweise wird das Vorproduktteilungsmaß gegenüber dem Funktionsteilungsmaß um 1 bis 3% größer eingestellt. Das Kupplungsspiel von 0,5 bis 5% ist durch die Vorthermofixierung beeinflußt, es kann jedoch nicht lediglich durch die Vorthermofixierung, sondern auch durch eine anschließende Behandlung eingestellt sind. - Für das erfindungsgemäße Verfahren ist wesentlich, daß das Vorduktteilungsmaß in der angegebenen Weise größer ist als das Funktionsteilungsmaß. Auf diese Weise entsteht ein Kupplungsspiel, welches die Durchführung der Nachthermofixierung in der angegebenen Weise zuläßt, wobei gleichsam eine mehr oder weniger starke Stauchung in Längsrichtung der gekuppelten Vorprodukt-Bandhälften erfolgt. Das Kupplungsspiel kann auf verschiedenen Weise hergestellt werden. Insbesondere kann dabei das Färben, Trocknen und Ausrüsten als kupplungsspielbildend eingesetzt werden. Das Kupplungsspiel kann bei der Herstellung von gewebten Reißverschlüssen aber auch im Webautoamten hergestellt werden.

Im Zuge der Herstellung von Reißverschlüssen mit kontinuierlichen Verschlußgliederreihen aus Kunststoffmonofilament ist es grundsätzlich bekannt, eine zweistufige Thermofixierung durchzuführen (DE-PS 12 13 656). Hier wird jedoch gleichsam umgekehrt verfahren, als es die Erfindung lehrt. Bei der Formung der Verschlußgliederreihen wird eine Vorwärmung der noch nicht mit den Tragbändern verbundenen Verschlußgliederreihen auf eine niedrige Temperatur durchgeführt, um lediglich eine ungefähre Formhaltigkeit herbeizuführen. Erst in der letzten Fertigungsstufe erfolgt eine Erhitzung der an die Tragbänder angenähten Verschlußgliederreihen auf eine nahe der Erweichungstemperatur liegende Thermofixierungstemperatur. Untersuchungen haben ergeben, daß dadurch die Austauschbarkeit der Reißverschlußhälften nachteilig beeinflußt wird.

Die Erfindung beruht auf der überraschenden Erkenntnis, daß bei der Herstellung eines gleichsam zu großen Vorproduktteilungsmaßes und einer anschließenden Reduzierung dieses Vorproduktteilungsmaßes auf das Funktionsteilungsmaß unter Berücksichtigung der angegebenen Temperaturen das Funktionsteilungsmaß sehr genau eingestellt werden kann, wobei sich das so eingestellte Funktionsteilungsmaß auch im Laufe der Zeit überraschenderweise praktisch nicht verändert. Offenbar wird hier ein Memory-Effekt aus der Vorthermofixierung genutzt.

Im einzelnen bestehen im Rahmen der Erfindung mehrere Möglichkeiten der weiteren Ausbildung des erfindungsgemäßen Verfahrens. So werden nach bevorzugter Ausführungsform der Erfindung die gekuppelten Vorprodukt-Bandhälften kontinuierlich hergestellt sowie kontinuierlich der Vorthermofixierung und kontinuierlich auch der Nachthermofixierung sowie der Einstellung des Funktionsteilungsmaßes unterworfen. An die Nachthermofixierung kann eine kontinuierliche Kühlung angeschlossen werden.

In der Ausführungsform für Vorprodukt-Bandhälften, die einschließlich der Verschlußgliederreihen durch Weben mit Hilfe eines Webautomaten vorgefertigt werden, wird die Vorthermofixierung der gekuppelten Vorprodukt-Bandhälften im oder am Ausgang des Webautomaten durchgeführt und werden die vorthermofixierten gekuppelten Vorprodukt-Bandhälften über ein Transportzahnrad abgezogen, dessen Zahnteilung dem Vorproduktteilungsmaß entspricht.

Gleichgültig ob es sich um Reißverschlüsse handelt, bei denen die Verschlußgliederreihen aus Kunststoffmonofilament mittels Nähnaht mit den Tragbändern verbunden sind, oder aber um Reißverschlüsse, bei denen die Verschlußgliederreihen in die Tragbänder eingewebt sind, werden nach bevorzugter Ausführungsform der Erfindung die Textilfäden der Tragbänder, die Kunststoffmonofilamente und die Verbindungsfäden, welche die Verschlußgliederreihen mit den Tragbändern verbinden, aus ursprünglich warmschrumpfbaren Kunststoff hergestellt und im warmschrumpfbaren Zustand der Vorthermofixierung unterworfen. Wenn die Textilfäden der Tragbänder, die Kunststoffmonofilamente und Verbindungsfäden, welche die Verschlußgliederreihen mit den Tragbändern verbinden, aus Polyester-Kunststoff bestehen, so empfiehlt die Erfindung, die gekuppelten Vorprodukt-Bandhälften im Temperaturbereich von 160 bis 220°C der Vorthermofixierung sowie im Temperaturbereich von 100 bis 140°C der Nachthermofixierung zu unterwerfen. Das gilt insbesondere dann, wenn die Kunststoffmonofilamente, aus denen die Verschlußgliederreihen geformt sind, aus Polyethylenterephthalat bestehen. Vorzugsweise wird bei der Thermofixierung eine Schrumpfung von etwa 10% bis etwa 20% verwirklicht.

Eine Vorrichtung für die Durchführung des beschriebenen Verfahrens ist Gegenstand der Patentansprüche 7 und 8 und wird im folgenden anhand einer lediglich ein Ausführungsbeispiel darstellenden Zeichnung ausführlicher erläutert. Es zeigen in schematischer Darstellung

Fig. 1    die Seitenansicht einer Vorrichtung für die Durchführung des beschriebenen Verfahrens,

Fig. 2    in gegenüber der Fig. 1 wesentlich vergrößertem Maßstab und mit weiteren konstruktiven Details einen Schnitt in Richtung A-A durch den Gegenstand nach Fig. 1, und

Fig. 3    entsprechend dem Schnitt A-A einen Schnitt durch die Zahnradeinschubeinrichtung bzw. die Zahnradabzugseinrichtung der Vorrichtung nach Fig. 1 mit weiteren Einzelheiten.

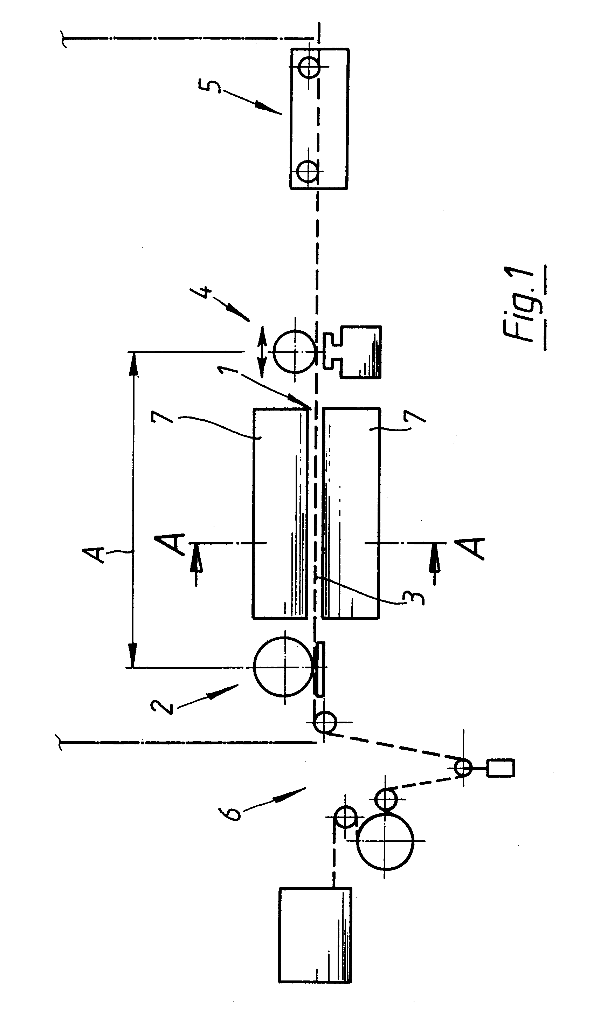

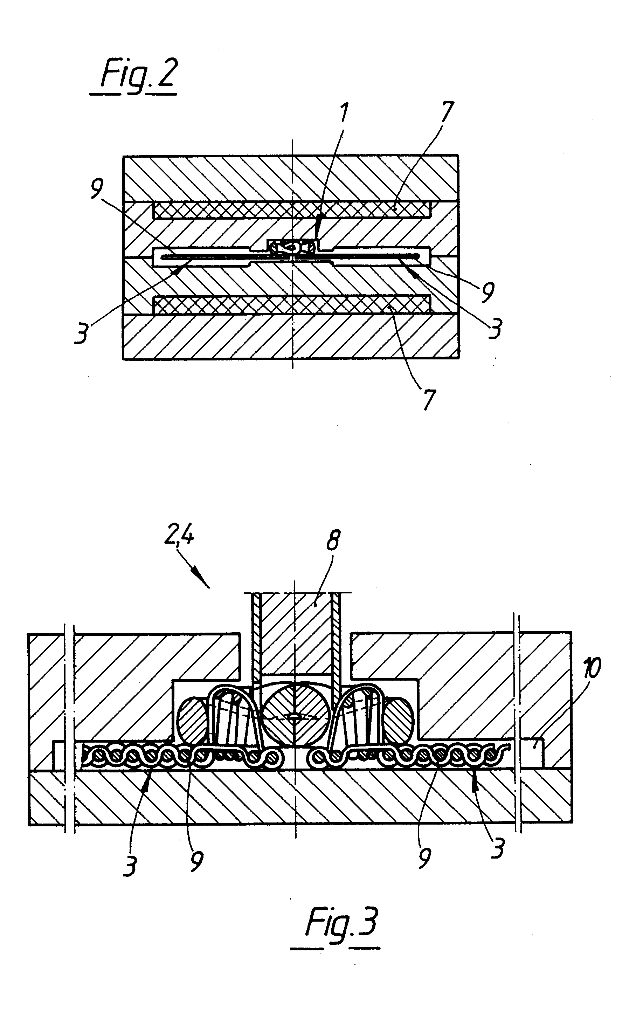

Die in den Figuren dargestellte Vorrichtung beschränkt sich auf die Verfahrensstufe der Nachthermofixierung. Sie besteht in ihrem grundsätzlichen Aufbau aus einem Nachthermofixierungskanal 1 mit vorgeschalteter Zahnradeinschubeinrichtung 2 für die vorthermofixierten gekuppelten Vorprodukt-Bandhälften 3 sowie mit einer nachgeschalteten Zahnradabzugseinrichtung 4 für die nachthermofixierten gekuppelten Bandhälften, einer Meßvorrichtung 5 für die direkte oder indirekte Messung des Funktionsteilungsmaßes und einer Regeleinrichtung 6. Der Regeleinrichtung 6 ist die Meßvorrichtung 5 als Istwert-Geber zugeordnet. Die Zahnradeinschubeinrichtung 2 besitzt eine dem Vorproduktteilungsmaßes entsprechende Teilung. Die Zahnradabzugseinrichtung 4 besitzt eine dem Funktionsteilungsmaß entsprechende Teilung. Zur Einstellung des Funktionsteilungsmaßes ist der Abstand A zwischen der Zahnradeinschubeinrichtung 2 und der Zahnradabzugseinrichtung 4 verstellbar. Im Ausführungsbeispiel der Fig. 1 ist durch Doppelpfeil angedeutet, daß dazu die Zahnradabzugseinrichtung 4 verstellt wird. Es könnte aber auch die Zahnradeinschubeinrichtung 2 verstellt werden und auch die Verstellung beider ist möglich. Der Nachthermofixierungskanal 1 ist so eingerichtet, daß die gekuppelten Vorprodukt-Bandhälften 3 in dem Nachthermofixierungskanal 1 so gestaucht werden können, daß das Kupplungsspiel, welches die Vorprodukt-Bandhälften 3 mitbringen, auf das Funktionsteilungsmaß eingerichtet wird. Es versteht sich, daß die Durchlaufgeschwindigkeit der gekuppelten Vorprodukt-Bandhälften 3 durch die Vorrichtung der Fertigungsgeschwindigkeit der Vorprodukt-Bandhälften 3 oder vorgegebenen Werten entspricht, wenn die Vorprodukt-Bandhälften z. B. von einem Coil abgezogen werden. Im Rahmen der Erfindung liegt es, zur Einstellung des Funktionsteilungsmaßes außerdem die Temperatur des Nachthermofixierungskanals 1 zu steuern oder zu regeln. Der Nachthermofixierungskanal1 besitzt dazu, wie die Fig. 2 erkennen läßt, entsprechende steuerbare oder regelbare Heizeinrichtungen 7. In der Fig. 3 erkennt man ein eingreifendes Zahnrad 8. Die Tragbänder 9 der Vorprodukt-Bandhälften 3 sind in entsprechenden Schlitzen 10 geführt und die Anordnung ist so getroffen, daß eine sehr genaue Zuführung und ein sehr genauer Abzug möglich sind.

**Patentansprüche**

1. Verfahren zur Herstellung von Reißverschlußhälften, die gegen andere Reißverschlußhälften aus der gleichen Fertigung austauschbar sind,

    im Zuge der Herstellung eines endlosen Reißverschlußbandes aus zwei gekuppelten Vorprodukt-Bandhälften für Reißverschlüsse einer in bezug auf Werkstoff und Maße vorgegebenen Type aus textilen Tragbändern und aus Kunststoffmonofilament hergestellten kontinuierlichen Verschlußgliederreihen,

    wobei die gekuppelten Vorprodukt-Bandhälften unter Anwendung einer Vorthermofixierung mit einer vorgegebenen Vorthermofixierungstemperatur mit einem Vorproduktteilungsmaß hergestellt werden, welches um 0,5 bis 5% größer ist als das Funktionsteilungsmaß,

    wobei die gekuppelten Vorprodukt-Bandhälften bei einer Nachthermofixierung mit einer Nachthermofixierungstemperatur, die niedriger ist als die Vorthermofixierungstemperatur, einer Nachthermofixierung unterworfen werden und

    wobei die gekuppelten Vorprodukt-Bandhälften bei der Nachthermofixierung gleichzeitig durch mechanische Hilfsmittel auf das Funktionsteilungsmaß eingestellt und/oder gehalten werden - sowie danach als Reißverschlußband abgezogen werden.

2. Verfahren nach Anspruch 1, wobei die gekuppelten Vorprodukt-Bandhälften kontinuierlich hergestellt sowie kontinuierlich der Vorthermofixierung, und kontinuierlich auch der Nachthermofixierung sowie der Einstellung des Funktionsteilungsmaßes unterworfen werden.

3. Verfahren nach einem der Ansprüche 1 oder 2, wobei an die Nachthermofixierung eine kontinuierliche Kühlung angeschlossen wird.

4. Verfahren nach einem der Ansprüche 1 bis 3 in der Ausführungsform für Vorprodukt-Bandhälften, die einschließlich der Verschlußgliederreihen durch Weben mit Hilfe eines Webautomaten vorgefertigt werden, wobei die Vorthermofixierung der gekuppelten Vorprodukt-Bandhälften im oder am Ausgang des Webautomaten durchgeführt und die vorthermofixierten gekuppelten Vorprodukt-Bandhälften über ein Transportzahnrad abgezogen werden, dessen Zahnteilung dem Vorproduktteilungsmaß entspricht.

5. Verfahren nach einem der Ansprüche 1 bis 4 wobei die Textilfäden der Tragbänder, die Kunststoffmonofilamente und die Verbindungsfäden, welche die Verschlußgliederreihen mit den Tragbändern verbinden, aus ursprünglich warmschrumpfbarem Kunststoff bestehen und im warmschrumpfbaren Zustand der Vorthermofixierung unterworfen werden.

6. Verfahren nach einem der Ansprüche 1 bis 5, wobei die Textilfäden der Tragbänder, die Kunststoffmonofilamente und Verbindungsfäden, welche die Verschlußgliederreihen mit den Tragbändern verbinden, aus Polyester-Kunststoff bestehen und im Temperaturbereich von 160 bis 220 °C der Vorthermofixierung sowie im Temperaturbereich von 100 bis 140 ˚C der Nachthermofixierung unterworfen werden.

7. Vorrichtung für die Durchführung des Verfahrens nach einem der Ansprüche 1 bis 6, mit

einem Nachthermofixierungskanal mit vorgeschalteter Zahnradeinschubeinrichtung für die vorthermofixierten gekuppelten Vorprodukt-Bandhälften sowie mit nachgeschalteter Zahnradabzugseinrichtung für die nachthermofixierten gekuppelten Bandhälften,

einer Meßvorrichtung für die direkte oder indirekte Messung des Funktionsteilungsmaßes und

einer Regeleinrichtung, der die Meßvorrichtung als Istwert-Geber zugeordnet ist,

wobei die Zahnradeinschubeinrichtung eine dem Vorproduktteilungsmaß entsprechende Zahnteilung und die Zahnradabzugseinrichtung eine dem Funktionsteilungsmaß entsprechende Zahnteilung aufweisen und wobei zur Einstellung des Funktionsteilungsmaßes der Abstand zwischen der Zahnradeinschubeinrichtung und der Zahnradabzugseinrichtung verstellbar ist.

8. Vorrichtung nach Anspruch 7, wobei zur Einstellung des Funktionsteilungsmaßes außerdem die Temperatur des Nachthermofixierungskanals steuerbar und/oder regelbar ist.

Fig.1

EP 0 469 358 A1

*Fig.2*

*Fig.3*

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 785 493 (WILLIAM PRYM WERKE KG) <br> * das ganze Dokument * * <br> – – – | 1 | A 44 B 19/42 |
| A | DE-A-2 256 095 (OPTI-HOLDING AG) <br> * Seite 2, letzter Absatz - Seite 9, letzter Absatz; Abbildungen * * <br> – – – | 1 | |
| A | DE-A-2 645 454 (OPTILON W. ERICH HEILMANN GMBH) <br> * das ganze Dokument * * <br> – – – | 1 | |
| A | DE-A-2 805 560 (OPTILON W. ERICH HEILMANN) <br> * das ganze Dokument * * <br> – – – | 1 | |
| A,D | EP-A-0 124 130 (YOSHIDA KOGYO KK) <br> * das ganze Dokument * * <br> – – – | 1 | |
| A,D | DE-B-1 213 656 (H-U. SOHR) <br> * das ganze Dokument * * <br> – – – – – | 1 | |

| | |
|---|---|
| | RECHERCHIERTE SACHGEBIETE (Int. Cl.5) |
| | A 44 B |

Der vorliegende Recherchenbericht wurde für alle Patentansprüche erstellt

| Recherchenort | Abschlußdatum der Recherche | Prüfer |
|---|---|---|
| Den Haag | 23 Oktober 91 | VANMOL M.A.J.G. |